# FASCICULE DE BREVET EUROPEEN

(11) **EP 3 841 645 B1**
(45) Date de publication et mention de la délivrance du brevet: **28.02.2024**
(21) Numéro de dépôt: 19745186.7
(22) Date de dépôt: 01.08.2019
(51) Int. Cl.: H02G 3/04, F16L 3/12, H02G 3/00

(54) **ENSEMBLE POUR LA PROTECTION ET SÉCURISATION D'UN FAISCEAU DE CÂBLAGE**
ANORDNUNG ZUM SCHUTZ UND ZUR SICHERUNG EINES KABELBAUMES
ASSEMBLY FOR PROTECTING AND SECURING A WIRING HARNESS

(30) Priorité: 20.08.2018 FR 1857534
(43) Date de publication de la demande: 30.06.2021
(73) Titulaire: Latelec, 31500 Toulouse (FR)
(72) Inventeur: MOURIERAS, Julien, 31676 Labège (FR)
(74) Mandataire: Ipside
(86) Numéro de dépôt international: PCT/EP2019/070833
(87) Numéro de publication internationale: WO 2020/038701

(56) Documents cités:
- EP-A1- 0 614 258
- GB-A- 2 504 766
- KR-U- 20130 001 739
- US-A1- 2007 034 750
- US-A1- 2009 094 799
- US-A1- 2014 311 770
- US-B2- 7 592 546

## Description

### Domaine de l'invention

La présente invention appartient au domaine de l'installation des faisceaux de câblage, notamment électriques.

L'invention trouve une application avantageuse dans le domaine aéronautique, pour équiper un aéronef.

### Etat de la technique

Dans un aéronef, les équipements électriques sont interconnectés au moyen de faisceaux de câblage. Un faisceau de câblage est formé par un ou plusieurs faisceaux de câbles équipés chacun de connectiques aux extrémités. Un faisceau de câbles comporte généralement un ou plusieurs câbles électriques.

Ces câbles électriques doivent être parfaitement maintenus et protégés, notamment des agressions susceptibles de les endommager, telles que par exemple des vibrations, des projections de liquide, des hautes températures, des radiations électromagnétiques....

Actuellement, préalablement à leurs installations et leurs fixations dans l'aéronef, les faisceaux de câblage sont protégés localement par une gaine. Cette opération de protection est réalisée à l'atelier de production, en dehors de l'aéronef. Cette opération de protection des faisceaux de câblage est minutieuse car l'opérateur doit choisir la gaine en fonction de son diamètre pour qu'il corresponde aux nombres de câbles électriques qui vont la traverser et en fonction de la protection souhaitée (température et/ou radiations électromagnétiques...). Ensuite, les faisceaux de câblage sont fixés à la structure de l'aéronef par des colliers de fixation et notamment sont agencés pour éviter que les câbles électriques soient en contact avec la structure et ainsi éviter un endommagement par frottement sous l'effet des vibrations en vol.

Ces opérations, de protection puis de fixation des faisceaux de câblage, sont très chronophages.

De plus, les gaines étant installées en dehors de l'aéronef, il peut s'avérer que les câbles électriques se retrouvent protégés inutilement dans certaines zones de l'aéronef.

Cette surprotection des câbles électriques augmente nécessairement le bilan de masse de l'aéronef.

Diverses gaines pour le guidage des câbles sont connues dans l'art, notamment de US 2009/094799 A1, EP 0 614 258 A1, US 2007/034750 A1, KR 2013 0001739 U, US 2014/311770 A1, US 7 592 546 B2.

### Exposé de l'invention

La présente invention vise à remédier aux inconvénients précités.

A cet effet, il est proposé par la présente invention un ensemble destiné à être monté sur une structure. Ledit ensemble comporte un conduit se présentant sous la forme d'un corps tubulaire creux, d'axe longitudinal X, dont un volume interne définit une zone de réception d'au moins un faisceau de câbles ou tout autre élément filaire. Le conduit est flexible. Le conduit est fendu en tout ou partie selon l'axe longitudinal X. En d'autres termes, le conduit comporte une fente longitudinale selon l'axe longitudinal X. Le conduit comporte une embase longitudinale. L'ensemble comporte en outre une pluralité de pattes de fixation solidaires fixement du conduit. Chaque patte de fixation est destinée à être assemblée à la structure.

Par faisceau de câbles, on entend un ou plusieurs câbles, notamment électriques.

Un tel ensemble, de part la flexibilité du conduit, permet une manipulation aisée, particulièrement avantageuse lorsque le conduit doit être installé dans un emplacement peu accessible. De plus, selon l'aménagement souhaité, il est possible d'imprimer au conduit, de part sa flexibilité, des courbures pour faire cheminer le au moins un faisceau de câbles en toute sécurité.

Le conduit est avantageusement réalisé dans un matériau qui permet sa déformation, notamment au niveau de la fente longitudinale le long de l'axe longitudinal X pour permettre son écartement et avoir ainsi accès à la zone de réception afin d'y introduire ou d'en extraire ou le ou les faisceaux de câbles.

Le conduit est également avantageusement réalisé dans un matériau suffisamment rigide pour n'engendrer aucune ouverture/entrebâillement au niveau de la fente longitudinale, le au moins un faisceau de câbles restant ainsi toujours protégé.

Le conduit ne présente aucune déformation selon sa section transversale, notamment au niveau des courbures. Le au moins un faisceau de câbles ne subit ainsi aucun écrasement dans le conduit.

Le matériau du conduit est par exemple réalisé à base d'élastomère.

Le conduit peut intégrer une ou plusieurs fonctionnalités, par exemple par l'ajout de fils et/ou renforts fibreux et/ou tissus spécifiques, pour s'adapter à des contraintes environnementales précises. Ainsi, une fonction de blindage électromagnétique, une fonction de protection anti-foudre ou encore une fonction de protection contre les hautes températures peuvent notamment être associées au conduit.

Le conduit peut présenter diverses dimensions longitudinales, selon le besoin.

Le conduit peut présenter également diverses formes et diamètres de sections transversales, en fonction par exemple du volume disponible environnant.

L'ensemble selon l'invention, comportant un tel conduit associé aux pattes de fixation solidaires fixement du conduit, permet avantageusement de réduire le temps d'installation du conduit sur une structure. En effet, les pattes de fixation étant solidaires fixement du conduit, il n'y a plus besoin d'adapter des colliers de fixation de l'art antérieur au conduit pour le fixer sur la structure. De plus, les pattes de fixation étant déjà intégrées au conduit, il n'y a plus de risque de perte de ces éléments lors de leur fixation à la structure.

Les pattes de fixation sont préférentiellement réalisées par surmoulage du conduit.

Au moins une patte de fixation est disposée préférentiellement à chaque extrémité du conduit.

Les pattes de fixation sont préférentiellement fixées à un support fixe de la structure, chacune via un élément de fixation.

L'ensemble comporte, au niveau de bords longitudinaux du conduit, situés de part et d'autre de la fente longitudinale, une paire d'évidements avec un évidement par bord longitudinal.

La zone de réception est compartimentée en deux canaux longitudinaux par un séparateur longitudinal. Le séparateur longitudinal s'étend depuis l'embase longitudinale vers la fente longitudinale.

Chaque canal longitudinal peut ainsi recevoir un ou des faisceaux de câbles. Un tel séparateur longitudinal permet avantageusement de faire cheminer parallèlement, et sans contact, les faisceaux de câbles.

Le séparateur longitudinal comporte un évidement, dans une même section transversale que la paire d'évidements du conduit.

L'ensemble comporte un élément de serrage configuré pour s'insérer dans la paire d'évidements du conduit et dans l'évidement du séparateur longitudinal.

L'élément de serrage est disposé dans le conduit de sorte à enserrer le au moins un faisceau de câbles situé dans la zone de réception pour permettre son maintien en position et éviter son usure par frottement. Le conduit n'a ainsi plus besoin d'être aux dimensions (en section transversale) du au moins un câble placé dans son volume interne. Il n'est plus utile nécessairement de choisir un conduit particulier selon le nombre et le diamètre du ou des câbles contenus dans le faisceau de câbles, ce qui peut générer un gain de temps non négligeable pour un opérateur.

L'élément de serrage permet également de resserrer le conduit au niveau de la fente longitudinale et éviter une éventuelle ouverture impromptue due à un évènement exceptionnel.

Dans des exemples de réalisation particuliers de l'invention, l'élément de serrage est une frette ou un collier de serrage autobloquant.

Dans une forme de réalisation, l'ensemble comporte une paire d'évidements agencée sensiblement à proximité d'une patte de fixation.

Un tel ensemble propose avantageusement, d'une part une protection complète tout autour du faisceau de câbles via le conduit qui est avantageusement réalisé dans un matériau suffisamment rigide pour n'engendrer aucune ouverture/entrebâillement au niveau de la fente longitudinale, et d'autre part un enserrement et un maintien en position des faisceaux de câbles dans chaque canal longitudinal du conduit par l'élément de maintien.

Un tel ensemble est préférentiellement destiné au domaine aéronautique, pour équiper un aéronef, mais peut également être destiné à tout autre domaine, tel que le domaine ferroviaire ou encore le domaine automobile, sans que cette liste soit exhaustive.

Selon des modes de mise en oeuvre particuliers, l'ensemble selon l'invention répond en outre aux caractéristiques suivantes, mises en oeuvre séparément ou en chacune de leurs combinaisons techniquement opérantes.

Préférentiellement, une paire d'évidements est agencée à proximité de chaque patte de fixation, au niveau des deux extrémités du conduit.

Selon l'invention, l'ensemble comporte le au moins un élément de serrage configuré pour s'insérer dans une paire d'évidements. Ledit au moins un élément de serrage n'est pas solidaire fixement du conduit.

Dans des modes de réalisation préférés de l'invention, l'ensemble comporte au moins un dispositif anti-rotation configuré pour interdire la rotation du conduit lors de sa fixation à la structure. Un tel dispositif anti-rotation permet de maintenir l'orientation du conduit dans la trajectoire souhaitée initiale imposée, représentant la configuration optimale du cheminement du câble.

Dans des exemples de réalisation particuliers de l'invention, le dispositif anti-rotation comporte une plaquette comportant une protubérance qui vient coopérer avec un renforcement pratiqué dans le conduit. Ladite plaquette n'est pas solidaire fixement du conduit. Elle est préférentiellement agencée au niveau d'une patte de fixation du conduit et est destinée à venir être fixée au support fixe de la structure, via l'élément de fixation fixant la patte de fixation audit support fixe.

L'invention est également relative à un aéronef comportant un ensemble tel que défini ci-dessus dans l'un de ses modes de réalisations, ledit ensemble étant fixé à un support fixe de la structure dudit aéronef via au moins un élément de fixation. L'ensemble est notamment destiné à recevoir au moins un faisceau de câblage. Un faisceau de câblage est formé d'au moins un faisceau de câbles, notamment électriques, équipés de connectiques aux extrémités.

L'installation d'un tel ensemble dans un aéronef est simplifiée par rapport à l'existant. Les opérations de protection et de fixation sont réalisées directement et avantageusement dans l'aéronef. Il n'est plus nécessaire de réaliser l'opération de protection du faisceau de câbles en atelier.

Un tel ensemble n'a pas vocation à être installé d'une extrémité d'un faisceau de câblage à l'autre pour protéger la totalité des faisceaux de câbles. Un tel ensemble est préférentiellement destiné à être installé dans les zones spécifiques, qui nécessitent une protection des câbles. On vient agir localement, selon le besoin. On limite ainsi la protection des câbles uniquement dans les zones nécessaires, permettant de réduire le poids de ces protections et de limiter leur impact sur le bilan de masse de l'aéronef.

L'ensemble selon l'invention peut répondre à plusieurs aménagements dans un aéronef. Ainsi, si durant la vie de l'aéronef, un réaménagement du cheminement des câbles doit être réalisé, entrainant une modification des emplacements pour fixer les faisceaux de câbles, il suffit d'extraire le ou les faisceaux de câbles du conduit, d'imprimer un nouveau cheminement au conduit, de leur fixer aux nouveaux emplacements, et de réintroduire le ou les faisceaux de câbles dans le conduit.

L'invention est également relative à un procédé d'installation d'un ensemble, tel que défini ci-dessus dans l'un de ses modes de réalisations, sur la structure, comportant les étapes de :
- positionnement d'un dispositif anti-rotation sur la structure,
- fixation du conduit sur la structure, via au moins un élément de fixation,
- insertion d'un élément de serrage dans la zone de réception du conduit, l'élément de serrage étant introduit dans un premier évidement de la paire d'évidements, puis dans l'évidement du séparateur longitudinal et ressortant par un second évidement de la paire d'évidements,
- insertion du au moins un faisceau de câbles dans la zone de réception du conduit,
- fermeture du conduit par ledit élément de serrage.

Un tel procédé permet d'enserrer et de maintenir en position les faisceaux de câbles dans chaque canal longitudinal du conduit par ce même élément de maintien.

### Présentation des figures

L'invention sera mieux comprise à la lecture de la description ci-après faite en référence aux dessins annexés :
La figure 1 illustre un exemple de section transversale d'un conduit d'un ensemble selon l'invention,
La figure 2 illustre un deuxième exemple de section transversale d'un conduit d'un ensemble selon l'invention,
La figure 3 illustre un troisième exemple de section transversale d'un conduit d'un ensemble selon l'invention,
La figure 4 illustre le positionnement des pattes de fixation de l'ensemble sur une structure,
La figure 5 illustre le positionnement et la fixation du conduit sur la structure,
La figure 6 illustre la mise en place des éléments de serrage sur le conduit,
La figure 7 illustre la mise en place de faisceaux de câbles dans le conduit,
La figure 8 illustre l'étape de fermeture du conduit,
La figure 9 illustre une vue de coté du conduit de la figure 8
La figure 10 illustre un exemple de positionnement de deux conduits sur une structure,
La figure 11 illustre une vue en perspective d'une extrémité d'un ensemble contenant des faisceaux de câbles.

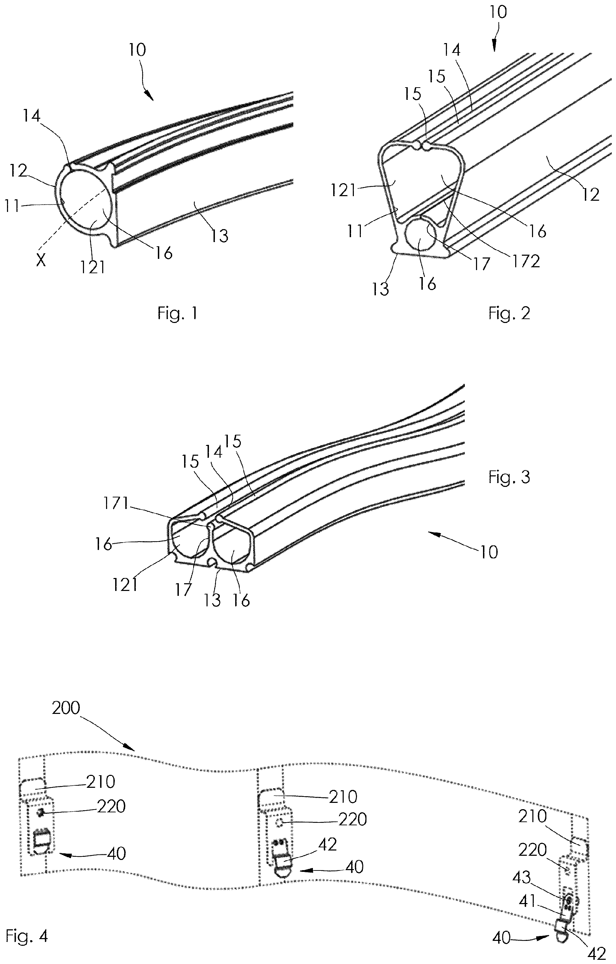

Les exemples des figures 1, 2 et 11 ne relèvent pas de l'invention et ne sont présents qu'à titre illustratif.

### Description détaillée d'un mode de réalisation de l'invention

La présente invention concerne un ensemble 100 notamment destiné au cheminement, à la protection et au maintien d'au moins un faisceau de câbles, notamment électriques, 80 sur une structure 200.

Il est clair que tout élément filaire, qu'il soit électrique ou non, par exemple un fil, une fibre optique,..., peut être placé dans l'ensemble en lieu et place d'un faisceau de câbles, sans limiter la portée de l'invention. Il peut également s'agir d'un faisceau de câblage.

L'ensemble 100 selon l'invention est destiné à équiper tout moyen de transport, notamment ceux des domaines aéronautique, ferroviaire ou automobile.

L'invention est décrite dans le contexte particulier d'un de ses domaines d'application préférés dans lequel l'ensemble est disposé dans un avion, qu'il soit civil ou militaire. Rien n'exclut cependant de disposer l'ensemble dans tout autre moyen de transport.

La structure 200 sur laquelle va venir se fixer l'ensemble 100 est par exemple un élément de fuselage d'avion. Plus précisément, l'ensemble 100 est destiné à être fixé sur un support fixe 210 de la structure 200. Le support fixe 210 est une pièce classique en soi et peut prendre par exemple la forme d'une cornière, d'un oméga, d'un Z. Le support fixe 210 comporte un orifice 220 pour le passage d'un élément de fixation 90.

L'ensemble 100 selon l'invention comporte un conduit 10 se présentant sous la forme d'un corps tubulaire creux, d'axe longitudinal X.

Le conduit 10 peut présenter toute longueur, en fonction de l'utilisation souhaitée. Deux conduits 10 peuvent être aboutés en longueur si nécessaire.

Le conduit 10 peut présenter tout type de section transversale, par exemple une section transversale circulaire, une section transversale trapézoïdale, une section transversale rectangulaire, sections illustrées respectivement sur les figures 1 à 3.

Le conduit 10 comporte une paroi interne 11 et une paroi externe 12. La paroi interne 11 délimite un volume interne définissant une zone de réception 121 du au moins un faisceau de câbles 80.

Le conduit 10 comporte une embase longitudinale 13, destinée à venir en vis-à-vis de la structure 200 sur laquelle il est destiné à être fixé.

Le conduit 10 est fendu selon l'axe longitudinal X, sur tout ou partie de sa longueur. En d'autres termes, le conduit comporte une fente longitudinale selon l'axe longitudinal X.

De manière préférentielle, ledit conduit est fendu sur toute sa longueur. Une telle configuration permet un accès à la zone de réception, n'importe où le long du conduit. L'accès à la zone de réception, via la fente longitudinale 14, peut s'avérer avantageux dans de nombreuses circonstances, notamment pour procéder à une réparation ou un remplacement du au moins un faisceau de câbles s'y trouvant, ou encore pour réaliser un raccordement avec un autre faisceau de câbles se trouvant hors du conduit.

Le conduit 10 est naturellement refermé sur lui-même, les bords longitudinaux 15 du conduit 10, situés de part et d'autre de la fente longitudinale 14, étant aboutés. L'introduction ou le retrait du au moins un faisceau de câbles 80 est réalisé simplement en séparant les bords longitudinaux 15 pour élargir la fente longitudinale 14.

Le conduit 10 est préférentiellement réalisé dans un matériau flexible.

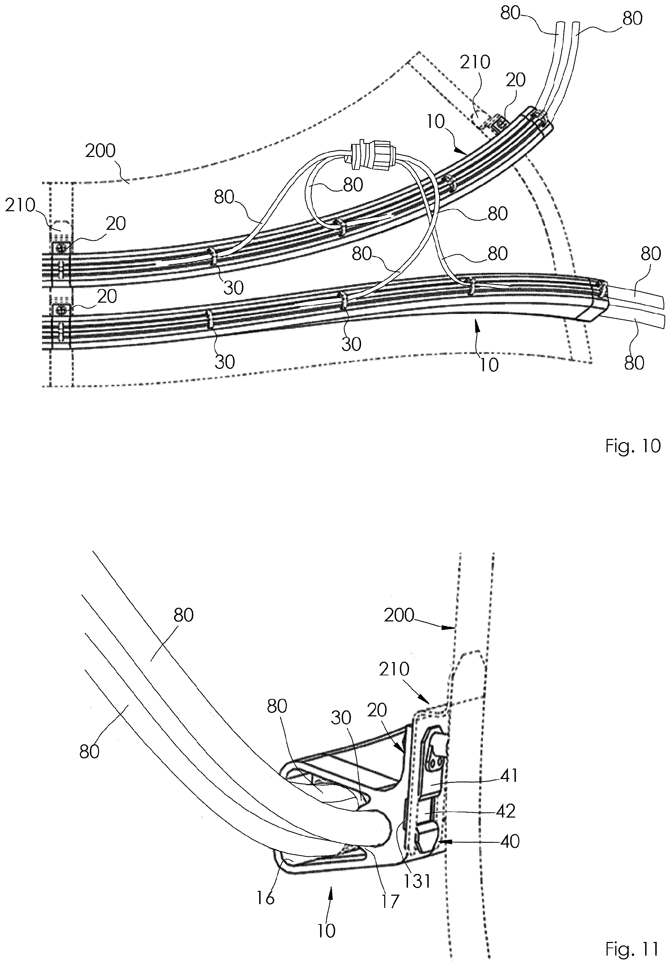

L'utilisation d'un tel conduit permet avantageusement d'imprimer à l'ensemble un ou plusieurs rayons de courbure, sans détériorer le au moins un faisceau de câbles 80 situé dans le conduit. La figure 10 illustre deux conduits présentant différents rayons de courbure.

Le conduit 10 est fabriqué en un matériau suffisamment rigide pour rester fermé, c'est-à-dire avec les bords longitudinaux 14 aboutés, mais suffisamment élastique pour être ouvert facilement, en écartant simplement lesdits bords longitudinaux.

Dans un exemple de réalisation, le conduit 10 est réalisé dans un matériau en élastomère, par exemple de type silicone.

Dans des variantes de réalisation, le conduit 10 comporte des renforts fibreux ou des tissus adaptés à des contraintes environnementales précises, par exemple pour protéger le au moins un faisceau de câbles d'un environnement à température élevée.

Dans un mode de réalisation ne relevant pas de l'invention, la zone de réception 121 se présente sous la forme d'un unique canal longitudinal 16, comme illustré figure 1.

Dans un autre mode de réalisation, illustrés sur les figures 2 et 3, la zone de réception 121 est compartimentée en une pluralité de canaux longitudinaux 16. Deux canaux longitudinaux adjacents sont séparés par un séparateur longitudinal 17. Chaque canal longitudinal 16 reçoit au moins un faisceau de câbles 80. L'exemple d'ensemble illustré sur la figure 2 ne relève pas de l'invention.

Préférentiellement, le séparateur longitudinal s'étend sur toute la longueur du conduit. Une telle configuration permet avantageusement de faire cheminer parallèlement des faisceaux de câblage, parfois de fonctions différentes, sans qu'ils soient en contact.

Les figures 2 et 3 illustrent deux exemples de conduits 10 comportant deux canaux longitudinaux 16.

Dans une forme de réalisation, illustré sur la figure 3, un séparateur longitudinal 17 est positionné de telle sorte que chaque canal longitudinal 16 est accessible par la fente longitudinale 14 du conduit 10. Le séparateur longitudinal 17 part de la paroi interne 11 du conduit 10 et s'étend en direction de ladite fente longitudinale dudit conduit. L'introduction d'au moins un faisceau de câbles 80 dans chaque canal longitudinal 16 s'effectue par la fente longitudinale 17 du conduit 10.

Dans une autre forme de réalisation, illustré sur les figures 2 et 11, le séparateur longitudinal 17 part d'une partie de la paroi interne 11 et s'étend en direction d'une autre partie de la paroi interne 11. Dans cette forme de réalisation, le séparateur longitudinal 17 comporte une fente longitudinale 172. La fente longitudinale 172 dudit séparateur longitudinal est préférentiellement disposée en vis-à-vis de la fente longitudinale 14 du conduit 10. Le volume définit par le séparateur longitudinal 17 définit un deuxième canal longitudinal. L'introduction d'un faisceau de câbles 80 dans ce deuxième canal longitudinal s'effectue successivement par la fente longitudinale 14 du conduit 10 puis par la fente longitudinale 172 du séparateur longitudinal 17. Dans cette forme de réalisation, le séparateur longitudinal est préférentiellement agencé dans la zone de réception de sorte que le deuxième canal longitudinal est dimensionné, en section, pour recevoir, de manière ajustée, un unique faisceau de câbles 80, comme illustré figure 11. L'autre canal longitudinal peut quant à lui recevoir un ou plusieurs faisceaux de câbles, qui seront maintenus entre eux par un moyen spécifique, dit élément de serrage, décrit ultérieurement.

L'ensemble 100 comporte en outre au moins une patte de fixation 20 solidaire fixement du conduit 10, comme illustré figures 4 à 9.

Dans la présente description, par convention, on désignera par « solidaires fixement» des pièces qui sont mutuellement liées de manière fixe, c'est-à-dire de sorte qu'un mouvement relatif entre elles est impossible.

La patte de fixation 20 est destinée à être placée contre le support fixe 210 de la structure 200. La patte de fixation 20 assure avantageusement l'interface entre le conduit 10 et le support fixe 210.

La patte de fixation 20 présente une face d'appui 21 sensiblement plane qui permet au conduit 10 de prendre appui sur le support fixe 210 de la structure 200.

La patte de fixation 20 s'étend préférentiellement depuis l'embase longitudinale 13 du conduit 10.

La patte de fixation 20 est pourvue d'un orifice 22 pour le passage d'un élément de fixation 90, tel que par exemple une vis ou un écrou.

Dans une forme de réalisation, la patte de fixation 20 est avantageusement assemblée fixement sur le conduit, par exemple par surmoulage.

Selon l'invention, l'ensemble 100 comporte une pluralité de pattes de fixation 20 sur le conduit 10. Les pattes de fixation 20 sont avantageusement disposées sur le conduit 10, à intervalle régulier et prédéfini.

De préférence, le conduit 10 comporte une patte de fixation 20 à chacune de ses extrémités 18.

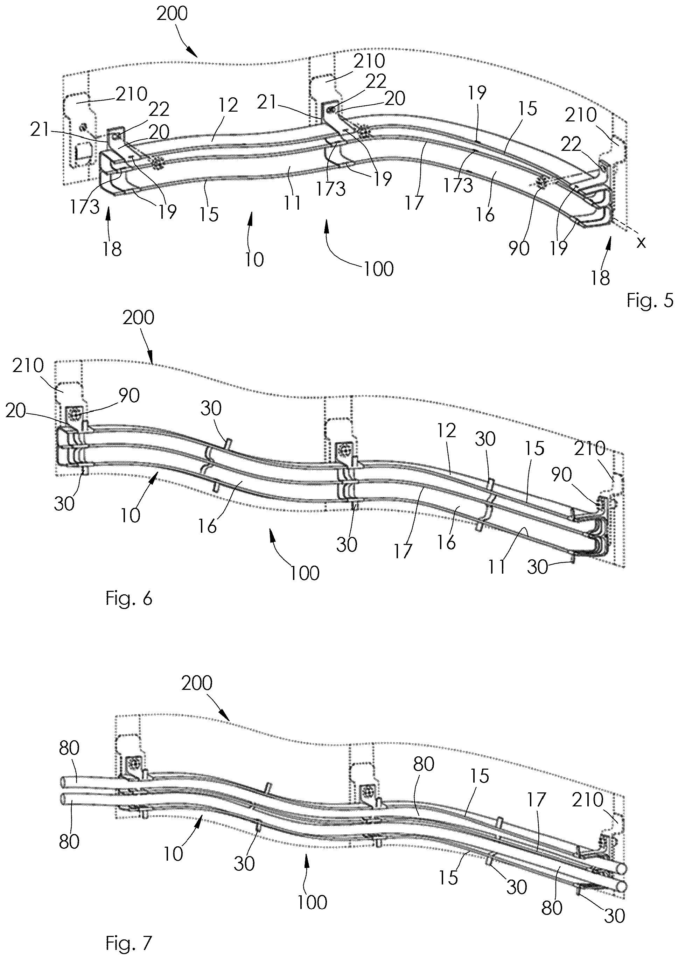

Dans l'exemple non limitatif de la figure 5, l'ensemble 100 comporte trois pattes de fixation 20, une patte de fixation à chaque extrémité du conduit et une patte de fixation sensiblement à mi-longueur du conduit 10.

Le conduit 10 comporte, au niveau de ses bords longitudinaux 15, au moins une paire d'évidements 19, un évidement de part et d'autre de la fente longitudinale 14 du conduit 10.

Les évidements 19 d'une paire d'évidements sont agencés sensiblement dans une même section transversale du conduit.

Les évidements 19 sont utilisés pour permettre le passage d'un élément de serrage 30, tel que par exemple une frette, un collier de serrage autobloquant, une attache auto-serrante ou autoadhésive.

L'élément de serrage 30 présente un double rôle. Il forme d'une part un élément de fermeture du conduit 10 en resserrant ledit conduit par rapprochement des bords longitudinaux 15 du conduit 10. Il forme d'autre part un élément de sécurisation du au moins un faisceau de câbles 80 dans son canal longitudinal 16, en le maintenant en position pour éviter notamment que les câbles le constituant ne s'usent par frottement contre la paroi interne 11 du conduit. La figure 11 montre l'élément de serrage maintenant en position plusieurs faisceaux de câbles dans un des canaux longitudinaux.

Dans un mode de réalisation préféré, le conduit 10 comporte une pluralité de paires d'évidements 19, préférentiellement réparties régulièrement le long du conduit.

Dans un exemple de réalisation, le conduit comporte une paire d'évidements 19 agencée à proximité de chaque patte de fixation 20.

Dans l'exemple non limitatif de la figure 5, le conduit 10 comporte cinq paires d'évidements 19, trois à proximité des trois pattes de fixation 20 et une intercalée à mi-distance entre chaque patte de fixation 20.

Lorsque le conduit comporte au moins deux canaux longitudinaux 16, avec au moins un séparateur longitudinal 17 qui s'étend depuis l'embase longitudinale 13 vers la fente longitudinale 14 du conduit, ledit au moins séparateur longitudinal 17 comporte un évidement 173, dans chaque même section transversale qu'une paire d'évidements 19 du conduit.

Dans une même section transversale du conduit 10, un évidement 173 d'un séparateur longitudinal 17 est destiné à recevoir le même élément de serrage 30 que la paire d'évidements 19 associée. Le nombre d'éléments de serrage est ainsi limité. Un même élément de serrage 30 enserre les faisceaux de câbles disposés dans chaque canal longitudinal et les maintient avantageusement en position dans chaque canal longitudinal, et donc dans le conduit, limitant l'usure par frottement contre la paroi interne dudit conduit.

L'évidement 173 d'un séparateur longitudinal 17 est disposé préférentiellement à proximité d'une extrémité libre 171 du séparateur longitudinal 17, c'est-à-dire de l'extrémité située du coté de la fente longitudinale14 du conduit.

Dans un mode préféré de réalisation, l'ensemble 100 comporte un dispositif anti-rotation 40 configuré pour empêcher la rotation du conduit 10 lorsqu'un élément de fixation 90 est serré, par vissage/boulonnage ou autre, à un support fixe 210 de la structure 200.

Dans un exemple de réalisation, le dispositif anti-rotation 40 se présente sous la forme d'une plaquette 41 destinée à venir s'insérer entre le support fixe 210 et la structure 200, comme illustré sur la figure 4.

Le support fixe, illustré sur les figures 4 à 9 et 11, présente la forme d'une cornière. Le support fixe comporte un orifice 220 pour le passage de l'élément de fixation 90.

La plaquette 41 comporte une protubérance 42 destinée à venir s'insérer dans un renfoncement 131 pratiqué dans l'embase longitudinale 13 du conduit 10, dans l'alignement d'une patte de fixation.

Il est également possible d'imaginer une configuration inverse, dans laquelle la plaquette comporte un renfoncement et l'embase longitudinale du conduit comporte une protubérance, le renfoncement et la protubérance coopérant pour bloquer le conduit en rotation.

La plaquette 41 comporte en outre un orifice 43 pour le passage de l'élément de fixation. Ledit orifice de la plaquette est destiné à être en vis-à-vis de l'orifice 22 de la patte de fixation 20 lorsque le renfoncement 131 et la protubérance 42 coopèrent.

L'ensemble 100 comporte avantageusement d'autant de dispositifs anti-rotation 40 que de pattes de fixation 20 sur le conduit.

La figure 10 illustre deux conduits comportant chacun un faisceau de câbles, par exemple avec des fonctions différentes. Chaque conduit est fixé indépendamment à la structure avec une direction privilégiée et distincte, illustrant la capacité de flexibilité des conduits.

Grâce à leurs fentes longitudinales 14, il est possible d'extraire localement un des faisceaux de câbles de chaque conduit et de les réintroduire dans l'autre conduit, comme l'illustre la figure 10.

Les figures 4 à 8 illustrent différentes étapes d'un procédé d'installation d'un ensemble 100 sur une structure 200.

A titre d'exemple non limitatif, le procédé est décrit avec un exemple d'ensemble 100 comportant un conduit 10 à deux canaux longitudinaux 16, séparés par un séparateur longitudinal 17 s'étendant de l'embase longitudinale 13 vers la fente longitudinale 14 du conduit 10.

Les figures 5 à 7 illustrent le conduit 10 avec ses bords longitudinaux 15 écartés, pour une meilleure visualisation.

Dans une première étape, les dispositifs anti-rotation 40 sont mis en place au niveau de la structure 200.

La plaquette 41 est placée entre le support fixe 210 et la structure 200 de telle sorte que l'orifice 43 de ladite plaquette vienne en vis-à-vis de l'orifice 220 du support fixe 210. La protubérance 42 de la plaquette 40 saillit du support fixe 210.

La figure 4 illustre, de la droite vers la gauche, l'insertion progressive de la plaquette 41 entre le support fixe 210 et la structure 200.

Dans une deuxième étape, le conduit 10 est fixé sur le support fixe 210 de la structure 200.

Le conduit 10 est disposé de telle sorte que son embase longitudinale 13 est placée du coté des supports fixes 210. Les orifices 22 de chaque patte de fixation 20 viennent en vis-à-vis des orifices 220 des supports fixes 210 associés.

En positionnant le conduit 10, la protubérance 42 de chaque plaquette 40 prend place dans chaque renfoncement 131 de l'embase longitudinale 13 du conduit 10.

Le conduit 10 est ensuite assemblé au support fixe 210 par serrage de l'élément de fixation sur ledit support fixe.

La figure 5 illustre, de la gauche vers la droite, le positionnement progressif du conduit 10 contre le support fixe 210.

A l'issue de cette étape, chaque support fixe 210 est pris en sandwich entre une patte de fixation 20 et une plaquette 41. Les orifices 22, 43, 220 d'une patte de fixation 20, d'une plaquette 41 et d'un support fixe 210 ne forment qu'un seul orifice. Le conduit 10 est fixement maintenu contre le support fixe 210.

Dans une troisième étape, les éléments de serrage 30 sont installés dans le conduit 10, pour chaque paire d'évidements 19.

Un élément de serrage 30 est introduit dans un premier évidement 19 d'une paire d'évidements et en ressort par un second évidement de la paire d'évidements. Puis l'élément de serrage 30 est plaqué contre la surface interne du conduit.

Lorsque le conduit 10 comporte un séparateur longitudinal 17, comme illustré figure 6, pour chaque paire d'évidements 19, un élément de serrage 30 est également introduit dans l'évidement 173 dudit séparateur longitudinal, après insertion dans le premier évidement 19 mais avant sa sortie par le second évidement 19.

L'ordre de mise en oeuvre des étapes 2 et 3 n'est pas imposé et, suivant le procédé, peuvent être réalisées dans un ordre différent de l'ordre décrit, sans modifier le résultat desdites étapes.

De même, la troisième étape pourrait être réalisée préalablement à la première étape, sans modifier le résultat desdites étapes.

Dans une quatrième étape, au moins un faisceau de câbles 80 est introduit dans le conduit 10.

Dans une première phase, les bords longitudinaux 15 du conduit sont écartés.

Dans une deuxième phase, le au moins un faisceau de câbles 80 est introduit dans la zone de réception 121, via la fente longitudinale 14.

Dans une dernière phase, après insertion du au moins un faisceau de câbles 80, les bords longitudinaux 15 sont relâchés et reviennent dans leur position initiale par élasticité en refermant le conduit 10.

L'insertion du au moins un faisceau de câbles peut être progressive.

Lorsque le conduit 10 comporte un séparateur longitudinal 17, au moins un faisceau de câbles 80 est introduit dans chaque canal longitudinal 16. Dans l'exemple illustré sur la figure 7, un faisceau de câbles 80 est introduit dans chaque canal longitudinal 16.

A l'issue de cette étape, le au moins un faisceau de câble est introduit dans le conduit, avec l'élément de câblage entre la surface interne du conduit et le au moins un faisceau de câbles. Lorsque le conduit 10 comporte un séparateur longitudinal 17, au moins un faisceau de câbles 80 est introduit dans chaque canal longitudinal 16, avec l'élément de câblage entre la surface interne du conduit et le au moins un faisceau de câbles dans chaque canal longitudinal.

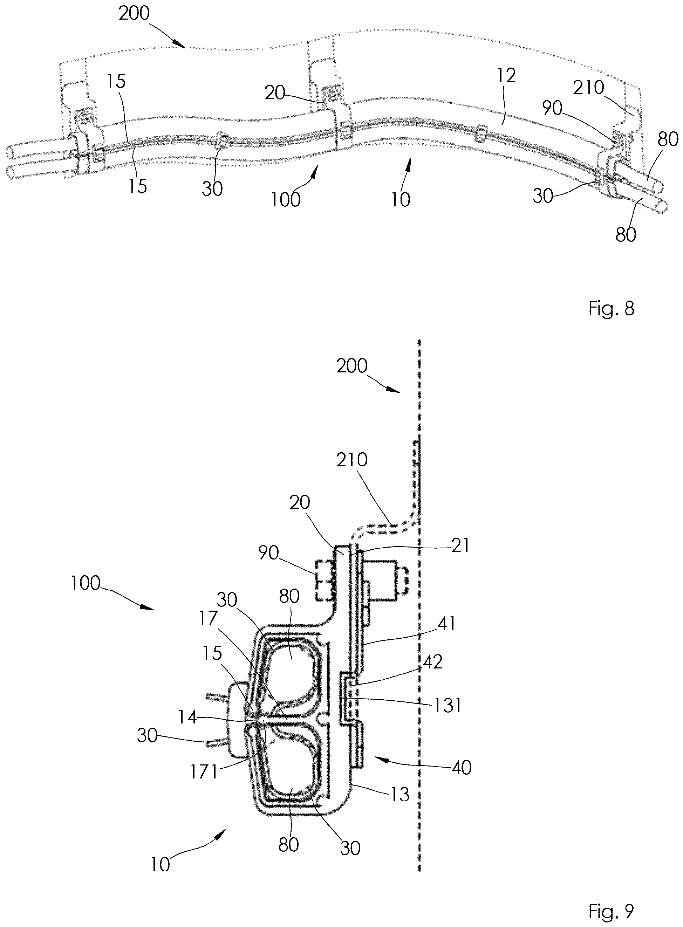

Dans une dernière étape, comme illustré figure 8, le conduit est fermé.

Le conduit 10 est fermé grâce au serrage de l'élément de serrage 30.

En refermant l'élément de serrage, on vient enserrer chaque câble du au moins un faisceau de câbles en position bloquée dans son canal longitudinal 16, qui se retrouve ainsi sécurisé.

La figure 9 illustre une vue de coté du conduit de la figure 8, au niveau d'une patte de fixation. On devine le cheminement de l'élément de serrage dans le conduit et on constate la sécurisation du câble dans chaque canal longitudinal.

La description ci-avant illustre clairement que par ses différentes caractéristiques et avantages, la présente invention atteint les objectifs qu'elle s'était fixés. En particulier, l'invention fournit un ensemble permettant une protection du faisceau de câbles de manière locale et spécifique au besoin. L'ensemble présente l'avantage d'être adapté pour que le faisceau de câbles soit maintenu de manière sécurisée dans le conduit et sur le support fixe, et pouvant être facilement retirable au besoin.

## Revendications

1. Ensemble (100) destiné à être monté sur une structure (200) d'un moyen de transport, et comportant :
- un conduit (10) se présentant sous la forme d'un corps tubulaire creux, d'axe longitudinal X, dont un volume interne définit une zone de réception (121) d'au moins un faisceau de câbles (80), ledit conduit étant flexible et comportant une fente longitudinale (14), ledit conduit comportant une embase longitudinale (13),
- une pluralité de pattes de fixation (20) solidaires fixement du conduit (10), lesdites pattes de fixation étant destinées à être assemblée à la structure (200), dans lequel :
- l'ensemble comporte, au niveau de bords longitudinaux (15) du conduit (10), situés de part et d'autre de la fente longitudinale (14), une paire d'évidements (19) avec un évidement par bord longitudinal,
- la zone de réception (121) est compartimentée en deux canaux longitudinaux (16) par un séparateur longitudinal (17), ledit séparateur longitudinal s'étendant depuis l'embase longitudinale (13) vers la fente longitudinale, ledit séparateur longitudinal comportant un évidement (173), dans une même section transversale que la paire d'évidements (19) du conduit,
- l'ensemble comporte un élément de serrage (30) configuré pour s'insérer dans une paire d'évidements (19) du conduit et dans l'évidement (173) du séparateur longitudinal (17).

2. Ensemble (100) selon la revendication 1 comportant une paire d'évidements (19) agencée sensiblement à proximité de chaque patte de fixation (20).

3. Ensemble (100) selon l'une des revendications précédentes comportant un dispositif anti-rotation (40) configuré pour interdire la rotation du conduit (10) lors de sa fixation à la structure (10).

4. Ensemble (100) selon la revendication 3 dans lequel le dispositif anti-rotation (40) comporte une plaquette (41) comportant une protubérance (42) qui vient coopérer avec un renforcement (131) pratiqué dans le conduit (10).

5. Ensemble (100) selon l'une des revendications précédentes dans lequel le conduit (10) est réalisé dans un matériau en élastomère.

6. Aéronef comportant un ensemble (100) selon l'une des revendications 1 à 5, ledit ensemble étant fixé à un support fixe (210) de la structure dudit aéronef via au moins un élément de fixation (90).

7. Procédé d'installation d'un ensemble (100) selon l'une des revendications 3 à 5 sur la structure (200) d'un moyen de transport, comportant les étapes de :
- positionnement d'un dispositif anti-rotation (40) sur la structure (200),
- fixation du conduit (10) sur la structure (200), via au moins un élément de fixation (90),
- insertion d'un élément de serrage (30) dans la zone de réception (121) du conduit (10), l'élément de serrage étant introduit dans un premier évidement de la paire d'évidements (19), puis dans l'évidement (173) du séparateur longitudinal (17) et ressortant par un second évidement de la paire d'évidements
- insertion du au moins un faisceau de câbles (80) dans la zone de réception (121) du conduit (10),
- fermeture du conduit (80) par ledit élément de serrage (30).

## Patentansprüche

1. Anordnung (100), die dazu bestimmt ist, an einer Struktur (200) eines Transportmittels montiert zu werden, und umfasst:
- eine Röhre (10), die sich in Form eines rohrförmigen Hohlkörpers mit einer Längsachse X darstellt, deren Innenvolumen einen Aufnahmebereich (121) für mindestens einen Kabelbaum (80) definiert, wobei die Röhre flexibel ist und einen Längsschlitz (14) umfasst, wobei die Röhre eine Längsbasis (13) umfasst,
- eine Vielzahl von Befestigungsklammern (20), die fest mit der Röhre (10) verbunden sind, wobei die Befestigungsklammern dazu bestimmt sind, an der Struktur (200) angebracht zu werden,
wobei:
- die Anordnung im Bereich von Längskanten (15) der Röhre (10), die sich zu beiden Seiten des Längsschlitzes (14) befinden, ein Paar Aussparungen (19), mit einer Aussparung pro Längskante, umfasst,
- der Aufnahmebereich (121) durch einen Längstrenner (17) in zwei Längskanäle (16) unterteilt ist, wobei sich der Längstrenner von der Längsbasis (13) zum Längsschlitz hin erstreckt, wobei der Längstrenner eine Aussparung (173) in demselben Querschnitt wie das Paar Aussparungen (19) der Röhre umfasst,
- die Anordnung ein Klemmelement (30) umfasst, das so konfiguriert ist, dass es in ein Paar Aussparungen (19) der Röhre und in die Aussparung (173) des Längstrenners (17) passt.

2. Anordnung (100) nach Anspruch 1, die ein Paar Aussparungen (19) umfasst, die im Wesentlichen in der Nähe jeder Befestigungsklammer (20) angeordnet sind.

3. Anordnung (100) nach einem der vorstehenden Ansprüche, die eine Drehschutzvorrichtung (40) umfasst, die so konfiguriert ist, dass sie das Verdrehen der Röhre (10) bei ihrer Befestigung an der Struktur (10) unterbindet.

4. Anordnung (100) nach Anspruch 3, wobei die Drehschutzvorrichtung (40) ein Plättchen (41) umfasst, das einen Vorsprung (42) umfasst, der mit einer in der Röhre (10) ausgestalteten Verstärkung (131) zusammenwirkt.

5. Anordnung (100) nach einem der vorstehenden Ansprüche, wobei die Röhre (10) aus einem Elastomermaterial hergestellt ist.

6. Luftfahrzeug, das eine Anordnung (100) nach einem der Ansprüche 1 bis 5 umfasst, wobei die Anordnung über mindestens ein Befestigungselement (90) an einem festen Träger (210) der Struktur des Luftfahrzeugs befestigt ist.

7. Verfahren zur Installation einer Anordnung (100) nach einem der Ansprüche 3 bis 5 an der Struktur (200) eines Transportmittels, das die folgenden Schritte umfasst:
- Positionieren einer Drehschutzvorrichtung (40) an der Struktur (200),
- Befestigen der Röhre (10) über mindestens ein Befestigungselement (90) an der Struktur (200),
- Einpassen eines Klemmelements (30) in den Aufnahmebereich (121) der Röhre (10), wobei das Klemmelement in eine erste Aussparung des Aussparungspaares (19) und anschließend in die Aussparung (173) des Längstrenners (17) eingeführt wird und durch eine zweite Aussparung des Aussparungspaares austritt,
- Einpassen des mindestens einen Kabelbaums (80) in den Aufnahmebereich (121) der Röhre (10),
- Verschließen der Röhre (80) mit dem Klemmelement (30).

## Claims

1. Assembly (100) intended to be mounted on a structure of a means of transport (200), and comprising:
- a duct (10) in the form of a hollow tubular body, of longitudinal axis X, an internal volume of which defines a receiving zone (121) for at least one cluster of cables (80), said duct being flexible and comprising a longitudinal slot (14), said duct comprising a longitudinal base (13),
- a plurality of attachment lugs (20) rigidly connected to the duct (10), said attachment lugs being intended to be assembled to the structure (200),
wherein:
- the assembly comprises, at longitudinal edges (15) of the duct (10), situated on either side of the longitudinal slot (14), a pair of through-holes (19) with one through-hole per longitudinal edge,
- the receiving zone (121) is compartmentalised into two longitudinal channels (16) by a longitudinal separator (17), said longitudinal separator extending from the longitudinal base (13) towards the longitudinal slot, said longitudinal separator comprising a through-hole (173), in the same cross section as the pair of through-holes (19) of the duct,
- the assembly comprises a clamping element (30) configured to be inserted in a pair of through-holes (19) of the duct and in the through-hole (173) of the longitudinal separator (17).

2. Assembly (100) according to claim 1, comprising a pair of through-holes (19) arranged substantially in proximity to each attachment lug (20).

3. Assembly (100) according to one of the preceding claims, comprising an anti-rotation device (40) configured to prevent rotation of the duct (10) during its attachment to the structure (10).

4. Assembly (100) according to claim 3, wherein the anti-rotation device (40) comprises a tip (41) comprising a protuberance (42) that cooperates with a recess (131) formed in the duct (10).

5. Assembly (100) according to one of the preceding claims, wherein the duct (10) is produced from an elastomer material.

6. Aircraft comprising an assembly (100) according to one of claims 1 to 5, said assembly being attached to a fixed support (210) of the structure of said aircraft via at least one attachment element (90).

7. Method for installing an assembly (100) according to one of claims 3 to 5 on the structure (200) of a means of transport, comprising the steps of:
- positioning an anti-rotation device (40) on the structure (200),
- attaching the duct (10) on the structure (200), via at least one attachment element (90),
- inserting a clamping element (30) in the receiving zone (121) of the duct (10), the clamping element being introduced into a first through-hole of the pair of through-holes (19), then into the through-hole (173) of the longitudinal separator (17), and re-emerging through a second through-hole of the pair of through-holes,
- inserting the at least one cluster of cables (80) in the receiving zone (121) of the duct (10),
- closing the duct (80) by means of said clamping element (30).
